**Europäisches Patentamt**

**European Patent Office**

**Office européen des brevets**

(19)

(11) Veröffentlichungsnummer: **0 092 160**
**B1**

(12) **EUROPÄISCHE PATENTSCHRIFT**

(45) Veröffentlichungstag der Patentschrift:
27.08.86

(51) Int. Cl.⁴: **B 60 L 11/04**

(21) Anmeldenummer: **83103576.1**

(22) Anmeldetag: **13.04.83**

(54) Antriebsaggregat für ein Kraftfahrzeug mit Brennkraftmaschine-elektrischem Antrieb.

(30) Priorität: **15.04.82 DE 3213927**

(43) Veröffentlichungstag der Anmeldung:
**26.10.83 Patentblatt 83/43**

(45) Bekanntmachung des Hinweises auf die Patenterteilung:
**27.08.86 Patentblatt 86/35**

(84) Benannte Vertragsstaaten:
**AT CH DE FR GB IT LI NL SE**

(56) Entgegenhaltungen:
**EP - A - 0 047 499**
**FR - A - 2 277 980**
**GB - A - 1 059 065**
**GB - A - 2 001 784**

(73) Patentinhaber: **STILL GMBH, Berzeliusstrasse 10, D-2000 Hamburg 74 (DE)**

(72) Erfinder: **Kremer, Manfred, Grootmoor 150, D-2000 Hamburg 71 (DE)**

(74) Vertreter: **Schaefer, Gerhard, Dr., Linde Aktiengesellschaft Zentrale Patentabteilung, D-8023 Höllriegelskreuth (DE)**

## Beschreibung

Die Erfindung bezieht sich auf ein Antriebsaggregat für ein Kraftfahrzeug mit einer willkürlich betätigbaren Bremse, vorzugsweise für ein Flurförderzeug, insbesondere für einen Hublader, mit einem willkürlich betätigbaren, insbesondere als Fahrpedal ausgestalteten Geschwindigkeitssollwertgeber zum Einstellen der Fahrgeschwindigkeit und mit einer Brennkraftmaschine, vorzugsweise einem Dieselmotor, wobei deren Einstellorgan und bzw. oder der Geschwindigkeitssollwertgeber mit einem Einstellungssignalgeber verbunden ist bzw. sind, und mit einem von dieser Brennkraftmaschine angetriebenen fremderregten Gleichstromgenerator und mit mindestens einem von diesem gespeisten fremderregten Gleichstrommotor, der mit einem Motordrehzahl-Istwert-Geber gekuppelt ist, und wobei das Signal des Geschwindigkeitssollwertgebers und das Signal des Motordrehzahl-Istwert-Gebers einem Gesschwindigkeitsregelorgan zugeführt werden, dessen Ausgangssignal einem Leistungsregelorgan zugeführt wird, das die Felderregung des Gleichstromgenerators steuert, wobei ferner das Signal des Geschwindigkeitssollwertgebers dem Geschwindigkeitsregelorgan über einen Sollwertintegrator zugeleitet wird, der bei schnellen Änderungen dieses Signales das dem Geschwindigkeitsregelorgan zufliessende Signal nach einem vorgegebenen Programm verzögernd ändert. Eine solche Einrichtung ist bereits durch die EP-A 2-47 499 bekannt. Durch das Aufschalten des Signales des Motordrehzahl-Istwert-Gebers auf das Geschwindigkeitsregelorgan wird erzielt, dass die jeweilige Fahrgeschwindigkeit im jeweiligen Zeitpunkt der mit dem Geschwindigkeitssollwertgeber gewählten Fahrgeschwindigkeit entspricht. Dadurch ergibt sich eine Fahrcharakteristik, bei der der Fahrer sehr feinfühlig die Fahrgeschwindigkeit beeinflussen kann. Durch Wahl der Geschwindigkeit, mit der der Geschwindigkeitssollwertgeber bewegt, beispielsweise das Fahrpedal durchgetreten wird, wird die Beschleunigung bestimmt und durch Zurücknehmen des Geschwindigkeitssollwertgebers, beispielsweise Fahrpedales, wird auch ein Verzögern bestimmt. Beim Verzögern fliesst die Energie von den Treibrädern zu der mit diesen verbundenen elektrischen Maschine und von dieser zu der mit der Brennkraftmaschine verbundenen elektrischen Maschine und durch diese zur Brennkraftmaschine, die in diesem Betriebszustand «Schleppleistung» aufnimmt. Wäre der Sollwertintegrator nicht vorhanden, so könnte durch sehr rasches Ändern der Einstellung des Geschwindigkeitssollwertgebers, beispielsweise sehr rasches Durchtreten des Fahrpedales, auf eine sehr hohe Beschleunigung gesteuert werden, die zu einer ruckartigen Fahrbewegung und zu hohen Stromstössen führt. Um dieses zu vermeiden und insbesondere auch weil die Fahrer von Fahrzeugen mit elektrischem Antrieb gewohnt sind, dass das Fahrzeug bei Zurücknehmen des Fahrpedales ausläuft, ist der Sollwertintegrator zwischengeschaltet, der einerseits die Beschleunigung begrenzt, andererseits bei plötzlichem Zurücknehmen des Geschwindigkeitssollwertgebers in die dem Stillstand des Fahrzeuges zugeordnete Einstellage bewirkt, dass der Geschwindigkeitssollwert nach einem bestimmten Programm abnimmt, das heisst, dass die Fahrgeschwindigkeit in einem durch den Sollwertintegrator bestimmten Mass abnimmt, wobei der Integrator derart ausgelegt sein kann, das das Beschleunigen nach einem anderen Programm erfolgt als das Verzögern.

Dieses Variieren des Fahrgeschwindigkeitssollwertes nach einem vorgegebenen Programm durch den Sollwertintegrator wirkt sich aber auch dann aus, wenn die Fahrgeschwindigkeit durch Betätigen einer Betriebsbremse, beispielsweise einer Reibungsbremse, schneller vermindert wird, als der Geschwindigkeitssollwert nach dem Programm absinkt. Diese Differenz zwischen tatsächlicher Fahrgeschwindigkeit und Geschwindigkeitssollwert hat nicht nur die Folge, dass der Fahrmotor noch ein Antriebsmoment erzeugt, während gleichzeitig die Bremse wirkt, so dass die Bremse zusätzlich zu der kinetischen Energie der abzubremsenden Masse auch noch die im Motor umgesetzte Energie aufnehmen muss, sondern hat auch zur Folge, dass zu jedem Zeitpunkt innerhalb der Zeitspanne, zu deren Ablauf der Sollwertintegrator auf den Geschwindigkeitssollwert Null herabgeregelt hat, die tatsächliche Fahrgeschwindigkeit kleiner ist als der Geschwindigkeitssollwert. Das wiederum hat zur Folge, dass dann, wenn in einem solchen Betriebszustand die Betriebsbremse wieder gelöst wird, das Fahrzeug infolge der Tatsache, dass der Geschwindigkeitssollwert höher ist als der Geschwindigkeitsistwert, wieder beschleunigt wird, obwohl nur Absicht des Fahrers war, dass das Fahrzeug auslaufen soll. Ist beispielsweise mittels einer Reibungsbremse des Fahrzeug bis zum Stillstand herabgebremst worden und ist der Geschwindigkeitssollwert infolge des Wirkens des Integrators noch höher als Null, so wird bei Loslassen der Betriebsbremse das Fahrzeug wieder zunächst auf den dann im Integrator anstehenden Sollwert beschleunigt und erst dann nach dem Programm des Sollwertintegrators verzögert.

Es ist bereits ein Brennstoffzufuhr-Regelsystem für einen Gasturbinenmotor bekannt, bei dem ein Drehzahlsollwert einem Differenzverstärker zugeführt wird, an dessen Ausgang ein Begrenzer geschaltet ist, an dessen Ausgang ein Integrator angeschlossen ist, dessen Ausgangssignal einem Brennstoffzufuhr-Regler zugeführt wird. Weiterhin wird dieses Ausgangssignal an den zweiten Eingang des genannten Differenzverstärkers geleitet und wird darüberhinaus an einen Eingang eines zweiten Differenzverstärkers geleitet, dessen zweitem Eingang ein Drehzahl-Istwert-Signal zugeführt wird und dessen Ausgangssignal dem Begrenzer zugeführt wird, der zwei Funktionsgeneratoren enthält, welche Grenzsignale für Beschleunigen und Verzögern abgeben, die das dem nicht einstellbaren Integrator zufliessende Signal beeinflussen. (FR 2 227 980). Dieses System hat die Aufgabe, durch Regelung der Brennstoffzufuhr die Abweichung zwischen Drehzahlsollwert und Drehzahllistwert so gering wie möglich zu halten. Der Integrator hat dabei die Aufgabe zu berücksichtigen, dass eine Gasturbine infolge der grossen zu beschleunigenden Massen auf Änderungen des Drehzahlsollwertsignales nur sehr träge reagiert, wobei auch die Änderung der Kraftstoffzufuhr nicht beliebig schnell erfolgen darf.

Der Erfindung liegt die Aufgabe zugrunde, zu erzielen, dass bei Abbremsen des Fahrzeuges mittels einer Reibungsbremse der am Ausgang des Integrators anstehende Sollwert dem durch das Bremsen angestrebten Betriebszustand angepasst wird.

Diese Aufgabe wird gemäss der Erfindung dadurch gelöst, dass bei einem Antriebsaggregat gemäss Oberbegriff des Patentanspruches 1 einerseits, wie an sich bekannt, der Sollwertintegrator mit mindestens einer beeinflussbaren, das Verzögerungsprogramm des Sollwertintegrators beeinflussenden Zusatzeinrichtung versehen ist, die als ein bei Überschreiten einer vorgegebenen Differenz zwischen dem Signal des Geschwindigkeitssollwertgebers einerseits und dem Signal des Motordrehzahl-Istwert-Gebers andererseits den Sollwertintegrator dem Motordrehzahl-Istwert nachführender Kontrollverstärker ausgestaltet ist, und dass andererseits mit der Bremse ein Bremssignalgeber verbunden ist und die Zusatzeinrichtung eine von dem Signal des Bremssignalgebers beeinflussbare, eine · Verkürzung der Laufzeit des Sollwertintegrators bewirkende Zusatzschaltung ist. Dadurch wird die genannte Aufgabe gelöst und werden die eingangs genannten Nachteile, die im Bremszustand ohne die Einrichtung gemäss der Erfindung auftreten würden, vermieden. Gemäss der Erfindung wird der Integrator von einem vom Betätigungszustand der Bremse abhängigen Bremssignalgeber beeinflusst und dadurch eine Verkürzung der Restlaufzeit des Sollwertintegrators durch Verkleinern von dessen Zeitkonstante bewirkt. Dadurch, dass der Sollwertintegrator mit einer von dem Signal des Bremssignalgebers beeinflussbaren, eine Verkürzung der Laufzeit des Sollwertintegrators durch Verkleinern von dessen Zeitkonstante bewirkenden Beeinflussungsvorrichtung verbunden ist, wird also durch das Ändern der Zeitkonstante des Integrators die Steilheit von dessen Kennlinie verändert, nämlich steiler.

Der Bremssignalgeber kann in verschiedener Weise ausgestaltet sein, beispielsweise bei einer hydraulischen Bremse ein Druckschalter sein, der entweder als Ein/Aus-Schalter bei Auftreten von Bremsdruck wirkt oder abhängig von der Grösse des Bremsdruckes die Grösse eines Widerstandes beeinflusst. Der Bremssignalgeber kann aber auch ein Trittplattenkontakt an einem Bremspedal sein, der bei Einwirken einer Fusskraft auf die Trittplatte des Pedales schliesst oder ein von der Fusskraft abhängiges Signal gibt.

Die Einrichtung gemäss der Erfindung kommt bei starkem Abbremsen aus hoher Fahrgeschwindigkeit besonders zur Wirkung.

In einer besonders zweckmässigen Ausgestaltungsform ist die Zusatzschaltung derart ausgestaltet, dass sie einen an den Ausgang eines ersten Verstärkers angeschlossenen Widerstand überbrückt bzw. einen bis auf Null einstellbaren Widerstand zu diesem an den Ausgang des Verstärkers angeschlossenen Widerstand parallel schaltet.

Gemäss einer besonders zweckmässigen Ausgestaltungsform ist zwischen den Ausgang des Kontrollverstärkers und den Eingang des Sollwertintegrators eine Schwellwertschaltung geschaltet.

In der Zeichnung ist ein Schaltschema zu einem Ausführungsbeispiel der Erfindung dargestellt.

Fig. 1 zeigt ein Schaltschema zu einem Antriebssystem insgesamt und

Fig. 2 zeigt weiter in Einzelheiten gehend den Sollwertintegrator und die Zusatzeinrichtung mit den wichtigsten zugeordneten Teilen des Antriebssystems.

Die Brennkraftmaschine 1 treibt über eine Welle 2 einen Gleichstromgenerator mit einem Anker 3 und mit einer Feldwicklung 4 an. Der Ankerstrom des Gleichstromgenerators 3, 4 wird über Leitungen 5 zu einem Gleichstrommotor 6, 7 geführt, dessen Anker 6 an die Leitungen 5 angeschlossen ist, während der Feldwicklung 7 der Strom von einem Feldstromsteuerorgan 8 über Leitungen 9 zufliesst.

Die Brennkraftmaschine 1 ist im Ausführungsbeispiel ein Dieselmotor, der mit einem Einstellorgan in Form einer Einspritzpumpe 10 versehen ist, das seinerseits mit einem Einstellhebel 11 verbunden ist, der an seinem Ende einen Bolzen 12 aufweist, der mit Spiel in einem Langloch 13 eines Gestängehebels 14 geführt ist, der mit dem Fahrpedal 15 verbunden ist, das durch eine Feder 16 nach oben gezogen wird, während der Einstellhebel 11 durch eine Feder 17 nach oben gezogen wird. Der Einstellhebel 11 ist über ein Gestänge 18 mit einem Einstellsignalgeber 19 verbunden. Das Fahrpedal 15 ist mit einem Geschwindigkeitssollwertgeber 20 verbunden.

Für die Wahl der Fahrtrichtung ist ein Fahrtrichtungsgeber 21 vorgesehen, dessen Signal über Leitungen 22 zu einem Sollwertintegrator 23 geführt ist, der über ein Leitungssystem an eine Spannungsquelle 24 angeschlossen ist.

Das Signal des Geschwindigkeitssollwertgebers 20 wird über eine Leitung 25 ebenfalls dem Sollwertintegrator 23 zugeführt, dessen Ausgangssignal über eine Leitung 26 dem Geschwindigkeitsregelorgan 27 zugeführt wird, dem andererseits über eine Leitung 28 das Signal eines im Ausführungsbeispiel als Tachogenerator ausgestalteten Motordrehzahl-Istwert-Gebers 29 zugeführt wird. In dem Geschwindigkeitsregelorgan 27 werden die durch die Leitungen 26 und 28 diesem Geschwindigkeitsregelorgan zufliessenden Signale verglichen und ausgewertet zu einem Ausgangssignal, welches über eine Leitung 29 dem Stromregler 30 zugeführt wird.

An den Leitungen 5 ist weiterhin im Ausführungsbeispiel ein Strommesser 31 angeordnet, dessen Ausgangssignal über eine Leitung 32 ebenfalls dem Stromregler 30 zugeführt wird. Das Ausgangssignal des Stromreglers 30 fliesst über eine Leitung 33 zu einem Leistungsregelorgan 34.

Im Ausführungsbeispiel ist weiterhin an die Welle 2 der Brennkraftmaschine 1 ein Maschinendrehzahlsignalgeber 35 angeschlossen, von dem ein Signal über die Leitung 36 zu dem Vergleichsorgan 37 geführt wird, dem weiterhin über die Leitung 38 auch das Signal des Einstellorgansignalgebers 19 zugeführt wird. In dem Vergleichsorgan 37 werden die Signale der Geber 19 und 35 miteinander verglichen und ausgewertet. Das Ausgangssignal des Vergleichsorganes 37 fliesst durch die Leitung 39 ebenfalls dem Leistungsregelorgan 34 zu. Dessen Ausgangssignal fliesst durch die Leitung 40 zu dem Stellglied 41, das über die Leitung 42 und den Schalter 46 und die Endstufe 43 und die Leitung 44 an die Feldwicklung 4 des Gleichstromgenerators 3, 4 angeschlossen ist.

Von der zwischen dem Stromregler 30 und dem Leistungsregelorgan 34 verlaufenden Leitung 33 zweigt eine Zweigleitung 45 ab, die zum Schalter 46 führt, der abhängig von der Polarität des in der Leitung 33 und damit in der Leitung 45 anstehenden Signales über die Leitungen 47 und 48 die Endstufe 43 beaufschlagt.

Der Schleifer des als Potentiometer ausgestalteten Gebers 19 wird proportional dem Verschwenkwinkel des Hebels 11 verschoben, so dass der Geber 19 ein zur Einstellage des Hebels 11 proportionales Gleichspannungssignal liefert. Die Grösse dieses Gleichspannungssignales ist ein Mass für die Drehzahl der Brennkraftmaschine 1 in unbelastetem Zustand. Der von der Brennkraftmaschine 1 angetriebene Maschinendrehzahlsignalgeber 35 liefert eine der Drehzahl der Brennkraftmaschine 1 proportionale Frequenz, die über einen Frequenzspannungsumsetzer in eine Spannung umgesetzt wird, oder liefert unmittelbar eine Spannung. Diese Spannung ist ein Signal für den Istwert der Drehzahl der Brennkraftmaschine 1. Der Geschwindigkeitssollwertgeber 20 ist über das Gestänge 14, 11 mit dem Einstellorgan der Brennkraftmaschine 1 verbunden. Ein verschiebbarer Anschlag 60 ermöglicht, den Einstellhebel 11 nach in der Zeichnung links unabhängig vom Fahrpedal 15 zu verschwenken.

Der Motordrehzahl-Istwert-Geber 29 liefert ein dem Istwert der Fahrgeschwindigkeit entsprechendes Signal in Form einer Gleichspannung.

Soll- und Istwert für die Drehzahl des Gleichstrommotors 6, 7 werden in dem Geschwindigkeitsregelorgan 27 miteinander verglichen. Das Stellglied 41 dient zur Umwandlung der Ausgangsspannung des Leistungsreglers 34 in ein Rechtecksignal mit zwischen Null und 100% veränderlicher Einstelldauer.

Der Erregerstrom in der Feldwicklung 7 des Gleichstrommotors 6, 7 wird durch das Feldstromsteuerorgan 8 abhängig von der Grösse des durch die Leitungen 5 fliessenden Ankerstromes zwischen 50% bis 100% des Maximalstromes gesteuert.

Es ergibt sich folgender Regelvorgang: Nach Wahl der Fahrtrichtung durch Einstellen des Fahrtrichtungsgebers 21 wird durch Betätigen des Fahrpedals 15 vom Geschwindigkeitssollwertgeber 20 ein Geschwindigkeitssollwertsignal über die Leitung 25 zu dem Sollwertintegrator 23 gegeben. Ist die Veränderungsgeschwindigkeit des von dem Geschwindigkeitssollwertgeber 20 ausgehenden, durch die Leitungen 25 fliessenden Signales kleiner als dem Programm des Sollwertintegrator 23 entsprechend, wird dieses Signal unmittelbar durch die Leitung 26 weitergegeben, ist die Veränderungsgeschwindigkeit grösser, wird das Signal dem Programm des Sollwertgeschwindigkeitsintegrators 23 entsprechend begrenzt. Das Ausgangssignal wird auf das Geschwindigkeitsregelorgan 27 gegeben, das infolge einer hohen Verstärkung voll aufsteuert. Ebenso werden der Stromregler 30 und das Leistungsregelorgan 34 aufgesteuert, so dass die Feldwicklung 4 des Generators 3, 4 über die Endstufe 43 erregt wird mit der Folge, dass im Anker 3 ein Ankerstrom zu fliessen beginnt, dessen Grösse durch den Strommesser 31 gemessen wird, dessen Messignal dem Stromregler 30 zugeführt wird. Ist der als Maximalwert vorgesehene Wert des Ankerstromes erreicht, so regelt der Stromregler 30 die Aussteuerung der Endstufe 43 auf den zulässigen Wert zurück. Sinkt infolge zu hoher Belastung der Brennkraftmaschine 1 deren Drehzahl, übernimmt das Leistungsregelorgan 34 aufgrund des ihm von dem Vergleichsorgan 37 zugeführten Signales die Führung des die Feldwicklung 4 durchfliessenden Stromes und regelt derart, dass die Brennkraftmaschine 1 nicht überlastet wird.

Nach Erreichen des durch die Stellung des Geschwindigkeitssollwertgebers 20 vorgegebenen Geschwindigkeitssollwerts übernimmt das Geschwindigkeitsregelorgan 27 die Führung und hält die gewünschte Drehzahl der Abtriebswelle des Gleichstrommotors 6, 7 aufrecht, das heisst, die gewünschte Fahrgeschwindigkeit. Wird der Geschwindigkeitssollwertgeber 20 in eine einer kleineren Sollfahrgeschwindigkeit entsprechende Lage zurückgenommen, kehrt sich die Aussteuerung des Geschwindigkeitsregelorgans 27 um, da jetzt der vom Motordrehzahl-Istwert-Geber 129 gegebene Istsignalwert grösser ist als der von dem Geber 20 gegebene Sollsignalwert. Damit wird das Stromregelorgan 30 mit einem umgekehrten Stromsollwert beaufschlagt, der seinerseits ein entsprechendes Signal gibt, das schliesslich infolge der entsprechenden Steuerung der Erregung durch die Feldwicklung 4 die Folge hat, dass sich auch der Ankerstrom im Anker 3 des Generators und im Anker 6 des Gleichstrommotors umkehrt.

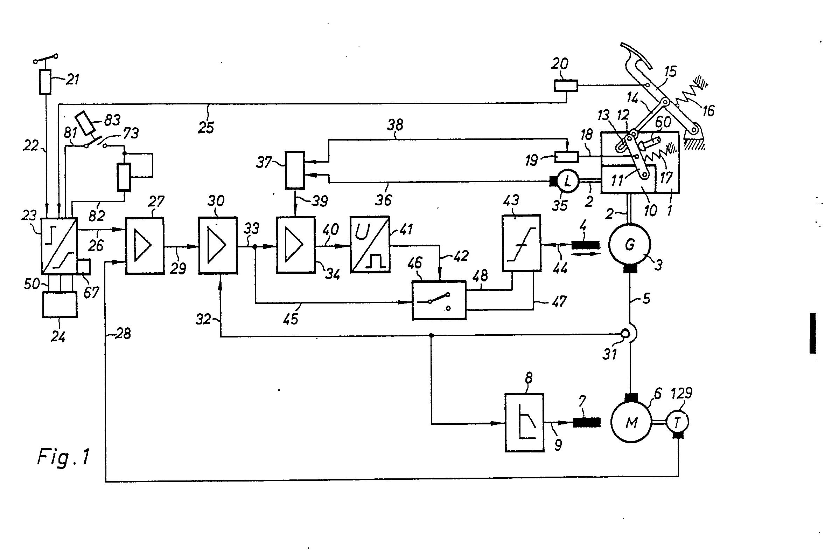

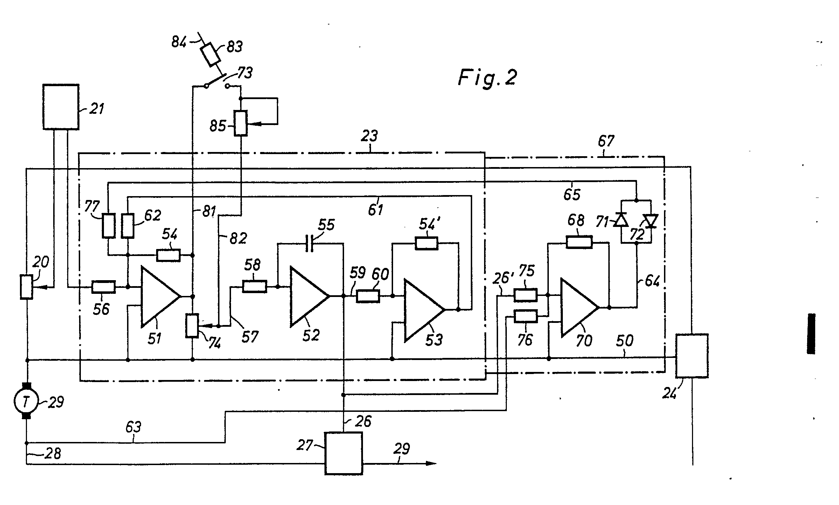

In Fig. 2 ist der Aufbau des Sollwertintegrators 23 im einzelnen dargestellt. In Fig. 2 sind der Fahrtrichtungsgeber 21 und der Geber 20 für das Geschwindigkeitssollwertsignal in einer etwas anderen Weise zusammengeschaltet, wie aus Fig. 1 zu ersehen. Dies ist im Zusammenhang mit der vorliegenden Erfindung jedoch unbeachtlich.

Der Sollwertintegrator 23 weist drei Verstärker 51, 52 und 53 auf, von denen die Verstärker 51 und 53 je über einen Widerstand 54 bzw. 54' rückgekoppelt sind und der Verstärker 52 über einen Kondensator 55 rückgekoppelt ist. Die Verstärker 51, 52 und 53 sind an die von der Spannungsquelle 24 ausgehende Leitung 50 angeschlossen. Das von dem Geber 20 für den Geschwindigkeitssollwert ausgehende und gegebenenfalls im Fahrtrichtungsgeber 21 umgepolte oder nicht umgepolte Signal wird über einen Widerstand 56 dem Verstärker 51 zugeleitet, von dem das Signal über einen einstellbaren Widerstand 74, der zum Vorwählen der Laufzeit des Sollwertintegrators 23 willkürlich einstellbar ist, über die Leitung 57 und einen Widerstand 58 zu dem Verstärker 52 fliesst, von dem aus die Leitung 26 zu dem Geschwindigkeitsregelorgan 27 führt. Weiterhin ist an die Ausgangsseite des Verstärkers 52 ausser der Leitung 26 eine Leitung 59 angeschlossen, die über einen Widerstand 60 zu dem Verstärker 53 führt, dessen Ausgang über eine Leitung 61 und einen Widerstand 62 wiederum an den Eingang des Verstärkers 51 geschlossen ist.

An die Leitung 26 ist weiterhin eine Leitung 26' angeschlossen, die über einen Widerstand 75 zum Eingang des Kontrollverstärkers 70 führt. An die vom Motordrehzahl-Istwert-Geber 129 zu dem Geschwindigkeitsregelorgan 27 führende Leitung 28 ist eine Leitung 63 angeschlossen, die über einen Widerstand 76 ebenfalls zum Eingang des Kontrollverstärkers 70 führt, der über einen Widerstand 68 rückgekoppelt ist. An den Ausgang des Kontrollverstärkers 70 ist eine Leitung 64 angeschlossen, die über zwei gegensinnig geschaltete Dioden 71 und 72, die nur öffnen, wenn ein bestimmter Schwellwert überschritten ist, und geschlossen bleiben, wenn der Schwellwert nicht erreicht ist, über eine Leitung 65 und einen Widerstand 77 wiederum zum Eingang des Verstärkers 51 geschaltet ist.

Der Kontrollverstärker 70 wird über den Widerstand 75 von dem in der Leitung 26' fliessenden Sollwertsignal sowie über den Widerstand 76 von dem in der Leitung 28 fliessenden Istwertsignal gesteuert. Entspricht das vom Motordrehzahl-Istwert-Geber 129 ausgehende Istwertsignal dem in der Leitung 26' fliessenden Sollwertsignal, so wird der Kontrollverstärker 70 nicht ausgesteuert und bleibt somit unwirksam. Die diesen Kontrollverstärker 70 enthaltende Zusatzeinrichtung 67 ist an den Sollwertintegrator 23 angeschlossen und angebaut. Wird bei mittels einer Reibungsbremse festgebremstem Fahrzeug das Fahrpedal 15 betätigt und somit von dem Geschwindigkeitssignalwertgeber 20 ein Signal gegeben, fliesst über die Leitung 26' und den Widerstand 75 dem Kontrollverstärker 70 ein Signal zu, während andererseits die Spannung des Motordrehzahl-Istwert-Gebers 129 Null ist, so dass alleine das in der Leitung 26 und über diese und die Leitung 26' und den Widerstand 75 am Kontrollverstärker 70 anstehende Signal diesen aussteuert, und zwar derart aussteuert, dass das Geschwindigkeitssollwertsignal über die Dioden 71, 72, über die Leitung 65 und den Widerstand 77 sowie die Verstärker 51 und 52 in der Leitung 26 vermindert wird. Die Dioden 71 und 72 sind so dimensioniert, dass sie nur öffnen, wenn ein bestimmter Schwellwert überschritten ist, so dass sie eine Differenz zwischen Soll- und Istwert zulassen, so dass ein Sollwertüberschuss vorhanden bleibt, um den Antrieb funktionsfähig und betriebsfähig zu halten, obwohl durch den Kontrollverstärker bei Auftreten einer Differenz zwischen Sollwert und Istwert der Sollwert annähernd auf den Istwert zurückgeregelt wird.

Ist der Sollwertintegrator 23 bereits hochgelaufen und wird anschliessend das Fahrzeug mittels einer mechanischen Reibungsbremse abgebremst, so ist infolge der Verzögerungszeit des Sollwertintegrators 23 das vorgenannte Eingreifen des Kontrollverstärkers 70 zu träge, das heisst, der Kontrollverstärker 70 regelt den Sollwert nicht schnell genug zurück, um mit Sicherheit zu verhindern, dass bei Lösen der Bremse der Fahrgeschwindigkeitssollwert noch grösser ist als die Istfahrgeschwindigkeit und deshalb das bereits abgebremste Fahrzeug gegen den Willen des Fahrers und entsprechend ohne Betätigung des Geschwindigkeitssollwertgebers 20 wieder beschleunigt wird.

Abhilfe bringt hier eine Verkürzung der Laufzeit des Sollwertintegrators 23 durch Verkleinern von dessen Zeitkonstante in Abhängigkeit von der Wirkung der Reibungsbremse. Zu diesem Zweck sind an den Ausgang des Verstärkers 51 vor und hinter dem einstellbaren Widerstand 74 zwei Leitungen 81 und 82 angeschlossen, die dann, wenn sie durch den Schalter 73 miteinander verbunden sind, den einstellbaren Widerstand 74 überbrükken. Der Schalter 73 wiederum wird durch einen Druckzylinder 83 betätigt, der über eine Zweigleitung 84 an die in der Zeichnung nicht mehr dargestellte Bremsdruckleitung, von der aus die Reibungsbremse beaufschlagt wird, angeschlossen ist. Die am Schleifer des einstellbaren Widerstandes 74 abgegriffene Spannung ist ein Mass für die Hochlaufzeit bzw. Runterlaufzeit des Integrators 52. Bei der in der Zeichnung schematisch dargestellten Ausgestaltung bedeutet Schleiferstellung unten längste Verzögerungszeit. Bei geschlossenem Schalter 73 wird über die Leitung 81, Schalter 73 und Leitung 82 die Spannung am Schleiferabgriff näher an die Spannung am Ausgang des Verstärkers 51 gezogen. Dadurch ergibt sich eine höhere Spannung in der Leitung 57 und somit wird bei Betätigen der hydraulischen Bremse und damit Schliessen des Kontaktes 73 die programmierte Laufzeit des Sollwertintegrators 23 verkürzt.

In die Leitung 82 kann ein Widerstand 85 eingeschaltet sein. Dieser kann willkürlich einstellbar sein. Bei einer bevorzugten Ausgestaltungsform ist dieser als Proportionalsteuerung über den Druckgeber des Druckes in der hydraulischen Bremsleitung ausgestaltet, so dass die Grösse des Widerstandes vom Druck in der Bremsdruckleitung abhängig ist.

Wird bei dieser Ausgestaltungsform das Fahrzeug durch Betätigen der mechanischen Reibungsbremse abgebremst, so wird gleichzeitig der Kontakt 73 geschlossen und damit die Laufzeit des Sollwertintegrators 23 wesentlich verkürzt, so dass bei Lösen der Bremse das in der Leitung 26 anstehende Geschwindigkeitssollwertsignal so weit herabgesenkt ist, dass dieses nicht mehr höher ist als die tatsächliche Fahrgeschwindigkeit, das heisst, dass dann, wenn das Fahrzeug bis zum Stillstand abgebremst ist, auch das Geschwindigkeitssollwertsignal in der Leitung 26 auf den Wert Null herabgesteuert ist.

## Patentansprüche

1. Antriebsaggregat für ein Kraftfahrzeug mit einer willkürlich betätigbaren Bremse, vorzugsweise für ein Flurförderzeug, insbesondere für einen Hublader, mit einem willkürlich betätigbaren, insbesondere als Fahrpedal ausgestalteten Geschwindigkeitssollwertgeber (15/20) zum Einstellen der Fahrgeschwindigkeit und mit einer Brennkraftmaschine (1), vorzugsweise einem Dieselmotor, wobei deren Einstellorgan (10) und/oder der Geschwindigkeitssollwertgeber (15) mit einem Einstellungssignalgeber (19) .verbunden ist bzw. sind, und mit einem von dieser Brennkraftmaschine angetriebenen, fremderregten Gleichstromgenerator (3, 4) und mit mindestens einem von diesem gespeisten fremderregten Gleichstrommotor (6, 7), der mit einem Motordrehzahl-Istwert-Geber (129) verbunden ist, wobei ferner das Signal des Geschwindigkeitssollwertgebers (20) und das Signal des Motordrehzahl-Istwert-Gebers einem Geschwindigkeitsregelorgan (27) zugeführt werden, dessen Ausgangssignal einem Leistungsregelorgan (34) zugeführt wird, das die Felderregung des Gleichstromgenerators (3, 4) steuert, wobei ferner das Signal des Geschwindigkeitssollwertgebers (20) dem Geschwindigkeitsregelorgan (27) über einen Sollwertintegrator (23) zugeleitet wird, der bei schnellen Änderungen dieses Signales das dem Geschwindigkeitsregelorgan (27) zufliessende Signal nach einem vorgegebenen Programm verzögernd ändert, gekennzeichnet durch die Kombination der folgenden Merkmale:

a) Der Sollwertintegrator (23) ist mit mindestens einer beeinflussbaren, das Verzögerungsprogramm des Sollwertintegrators (23) beeinflussenden Zusatzeinrichtung (67) versehen, die als ein bei Überschreiten einer vorgegebenen Differenz zwischen dem Signal des Geschwindigkeitssollwertgebers (15, 20) einerseits und dem Signal des Motordrehzahl-Istwert-Gebers (129) andererseits den Sollwertintegrator (23) dem Motordrehzahlistwert nachführender Kontrollverstärker (70) ausgestaltet ist.

b) Mit der Bremse ist ein Bremssignalgeber (83) verbunden, und die Zusatzeinrichtung ist eine von dem Signal des Bremssignalgebers (83) beeinflussbare, eine Verkürzung der Laufzeit des Sollwertintegrators (23) bewirkende Zusatzschaltung (81, 73, 82).

2. Antriebsaggregat nach Anspruch 1, dadurch gekennzeichnet, dass die Zusatzschaltung als eine Überbrückung zu einem an den Ausgang eines ersten Verstärkers (51) angeschlossenen Widerstand (74) ausgestaltet ist.

3. Antriebsaggregat nach Anspruch 1 oder 2, dadurch gekennzeichnet, dass zwischen den Ausgang des Kontrollverstärkers (70) und den Eingang des Sollwertintegrators (23) eine Schwellwertschaltung (71, 72) geschaltet ist.

## Claims

1. A drive unit with an arbitrarily-operable brake for a motor vehicle, preferably for an industrial truck, and in particular a fork lift truck, with an arbitrarily-operable theoretical-speed generator (15/20), in particular designed as a drive pedal which serves to adjust the travelling speed, and with an internal combustion engine (10), preferably a diesel engine, where the adjusting element (10), of said internal combustion engine and/or the theoretical-speed generator (15) is/are connected to an adjustment signal generator (19), a separately excited d.c. generator (3, 4) is driven by said internal combustion engine, and at least one separately excited d.c. engine (6, 7) is fed by said d.c. generator and connected to an actual value engine revolution generator (29), the signal of the theoretical-speed generator (20) and the signal of the actual value engine revolution generator being further supplied to a speed control element (27), whose output signal is fed to a power control element (34) which controls the field excitation of the d.c. generator (3, 4), furthermore the signal of the theoretical-speed generator (20) is fed to the speed control element (27) by a theoretical value integrator (23) which changes the signal fed to the speed control element (27) during rapid changes of said signal in a delayed fashion in accordance with a predetermined programme, characterised by the combination of the following features:

a) the theoretical value integrator (23) is provided with at least one additional control device (67) which influences the delay programme of a theoretical value integrator (23) and is designed as a control amplifier (70) which makes the theoretical value generator (23) follow up the engine revolution actual value when a predetermined difference between the signal of the theoretical-speed generator (15, 20) and the signal of the actual value engine revolution generator (29) is exceeded; and

b) a brake signal generator (83) connected to the brake and the additional device serves an additional circuit (81, 73, 82) influenced by the signal of the brake signal generator (83) to shorten the transit time of the theoretical value integrator (23).

2. A drive unit as claimed in Claim 1, characterised in that the additonial circuit is designed as a bridging circuit for a resistor (74) connected to the output of a first amplifier (51).

3. A drive unit as claimed in Claim 1 or 2, characterised in that a threshold value circuit (71, 72) is inserted between the output of the control amplifier (70) and the input of the theoretical value integrator (23).

## Revendications

1. Ensemble de propulsion pour un véhicule à moteur comportant un frein qui peut être actionné à volonté, de préférence pour un chariot de manutention, en particulier pour un chariot élévateur, avec un indicateur de valeur de consigne de vitesse (15, 20) manœuvrable à volonté, constitué en particulier comme une pédale d'accélérateur, pour le réglage de la vitesse de marche et avec un moteur (1), de préférence un moteur diesel, dont l'organe de réglage (10) et/ou l'indicateur de valeur de consigne de vitesse (15) est (sont) relié(s) à un indicateur de signal de réglage (19) et avec un générateur de courant continu (3, 4) à excitation indépendante entraîné par ce moteur et avec au moins un moteur à courant continu (6, 7) alimenté par cette excitation indépendante, qui est relié à un indicateur de vitesse effective de rotation du moteur (29), le signal de l'indicateur de valeur de consigne de vitesse (20) et le signal de l'indicateur de valeur réelle de rotation du moteur étant, en outre, amenés à un organe de régulation de vitesse (27) dont le signal de sortie est amené à un organe de régulation de puissance (34) qui commande l'excitation de champ du générateur à courant continu (3, 4) le signal de cet indicateur de valeur de consigne de vitesse (20) étant, en outre, amené à l'organe de régulation de vitesse (27) par l'intermédiaire d'un intégrateur de valeur de consigne (23) qui, pour des modifications rapides de ce signal, retarde le signal amené à l'organe de régulation de vitesse (27) selon un programme prédéterminé, caractérisé par la combinaison des caractéristiques suivantes:

a) L'intégrateur de valeur consigne (23) est prévu avec au moins un dispositif additionnel (67) sensible agissant sur le programme de décélération de l'intégrateur de valeur de consigne (23), et qui est réalisé comme un amplificateur de commande (70) qui, lors d'un dépassement d'une différence prédéterminée entre le signal de l'indicateur de valeur de consigne de vitesse (15, 20) d'une part et le signal de l'indicateur de valeur réelle de rotation du moteur (129), d'autre part. amène la valeur réelle de rotation du moteur a l'intégrateur de valeur de consigne (23);

b) un indicateur de signal de freinage (83) est lié au frein et le dispositif additionnel est un commutateur additionnel (81, 73, 82) sensible au signal de l'indicateur de signal de freinage (83) pour provoquer un raccourcissement du temps de transit de l'intégrateur de valeur de consigne (23).

2. Ensemble de propulsion selon la revendication 1, caractérisé en ce que le commutateur additionnel consiste en un shunt par une résistance (74) raccordée à la sortie d'un premier amplificateur (51).

3. Ensemble de propulsion selon la revendication 1 ou 2, caractérisé en ce que, entre la sortie de l'amplificateur de commande (70) et l'entree de l'intégrateur de valeur de consigne (23) est branché un commutateur à valeur de seuil (71, 72).

Fig. 1

0092160

Fig.2